Europäisches Patentamt

European Patent Office

Office européen des brevets

(11) Publication number: **0 174 596**
**B1**

(12) **EUROPEAN PATENT SPECIFICATION**

(45) Date of publication of patent specification: **24.02.88**

(51) Int. Cl.⁴: **B 65 G 47/08, B 65 B 35/40**

(21) Application number: **85111122.9**

(22) Date of filing: **03.09.85**

(54) Device for collecting commodities.

(30) Priority: **03.09.84 JP 185263/84**

(43) Date of publication of application:
**19.03.86 Bulletin 86/12**

(45) Publication of the grant of the patent:
**24.02.88 Bulletin 88/08**

(84) Designated Contracting States:
**BE CH DE FR GB IT LI NL SE**

(56) References cited:
**GB-A-1 055 611**
**GB-A-2 013 599**
**US-A-3 775 938**

(73) Proprietor: **AB TETRA PAK**
**Box 61**
**S-221 00 Lund (SE)**

(72) Inventor: **Inoko, Kenji**
**1818-51, Yasu-Cho Koshinohara**
**Yasu-Gun Shiga (JP)**

(74) Representative: **Glawe, Delfs, Moll & Partner**
**Patentanwälte**
**Postfach 26 01 62 Liebherrstrasse 20**
**D-8000 München 26 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

A plurality of commodities such as packages for beverages are combined to form a group or an array which is then integrally wrapped to be delivered to a market, as a unit.

A collecting device for commodities has been known wherein commodities successively supplied on a conveyor are intercepted by a pair of vertical belts provided at both sides of the conveyor, and only a predetermined number of the commodities are supplied further forward to be aligned at the end of the conveyor and are pushed off sidewise by a transverse pusher, and this operation is repeated to collect a predetermined number of the commodities as a group besides the conveyor.

The commodity groups collected in above processes are discharged respectively as units by a further pusher or the like towards a station for shrinkwrapping or the like (see e.g. GB—A—1 055 611).

In such a collecting device for the commodities wherein the commodities successively supplied by the conveyor are aligned in the groups of a predetermined number of commodities and are pushed out sideways by the transverse pusher, time loss is unavoidably generated in the collecting operation because it is impossible to align new commodities on the end portion of the conveyor while the transverse pusher reciprocates to push out the previously aligned commodities sideways. Further, the commodities aligned on the conveyance conveyor can not be pushed out as long as the previously collected group of commodities are being discharged by the further pusher.

Particularly in those cases where the collected commodity group includes only a relatively small number of commodities, the frequent time losses will add up considerably, thus reducing the operation capacity.

The greater the number of commodities pushed out by one operation or the number of collected commodities, the less frequently will said time loss occur. Taking this point into consideration, the present invention solves the above-mentioned problem according to the characterizing part of the claim by temporarily collecting a number of commodities which is larger than the desired number of the commodities to be finally collected, and then this temporarily formed array is divided and discharged to a following process. In this way the collecting operation can be performed efficiently.

Embodiments of a commodity collecting device of the invention incorporating a dividing device for commodities will be described with reference to the accompanying drawings wherein.

Figure 1 is a plan view of a whole collecting device.

Figures 2 to 5 are elevation views illustrating a dividing part of a collecting device in accordance with the processes.

Figure 6 is a plan view of Figure 2.

Figure 7 is a perspective view illustrating an example of a commodity to be collected, and

Figure 8 is a perspective view illustrating an example of a collected group of commodities.

Commodities successively supplied by a conveyor 1 are aligned in predetermined number at the end thereof and pushed out sideways by a pusher 4, and these operations, are repeated so as to regularly collect many commodities, a further pusher 7 being provided for discharging the whole collected commodity group A forward.

A receiving surface onto which the collected commodity groups A are discharged by the pusher 7 is divided into two floor portions 13 and 8 one behind the other with respect to the moving direction of the pusher 7. The last floor portion 8 is so designed that a small commodity group A1 of an intended number of the commodities can be exactly placed thereon, and is slightly movable longitudinally, i.e. in the direction of pusher 7. When the floor portion 8 moves forward, the group A1 of the commodities is separated from a group A2 of the commodities on the stationary floor portion 13 and is then discharged by an associated pusher 18 to a next process.

Further, a rear pusher 15 which is operable to engage with the rear end of the commodity group pushed out by the pusher 7 is provided at the rear end of the stationary rear floor portions 13, so that it can push the remaining commodity group A2 onto the forward floor 8 from which the small commodity group A1 has been discharged.

The operation is as follows.

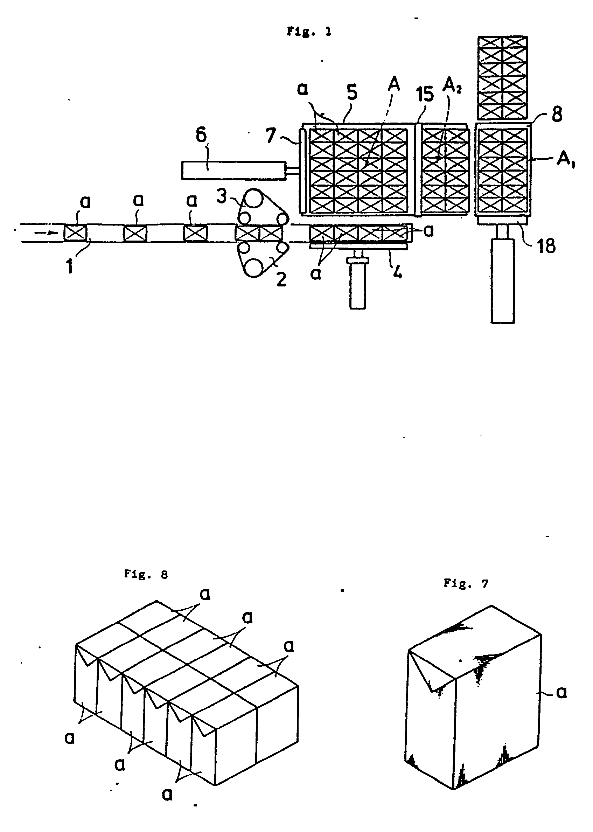

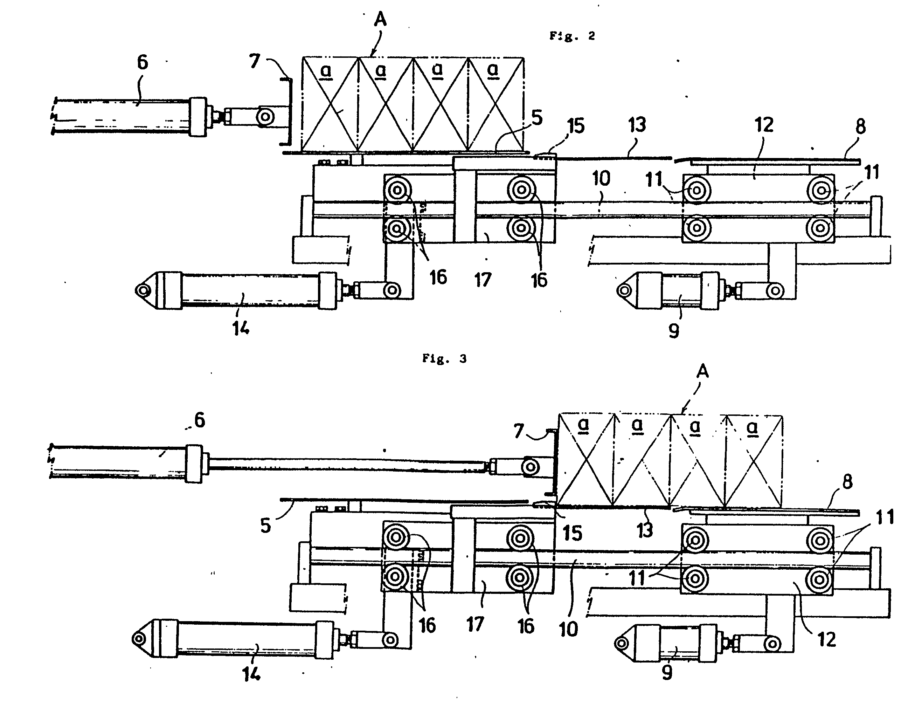

The commodities supplied by the conveyor 1 are lined up in predetermined number at the end portion thereof and are discharged sideways by the transverse pusher 4. This operation is repeated to collect the commodity group A on the platform 5. (Figures 1 and 2).

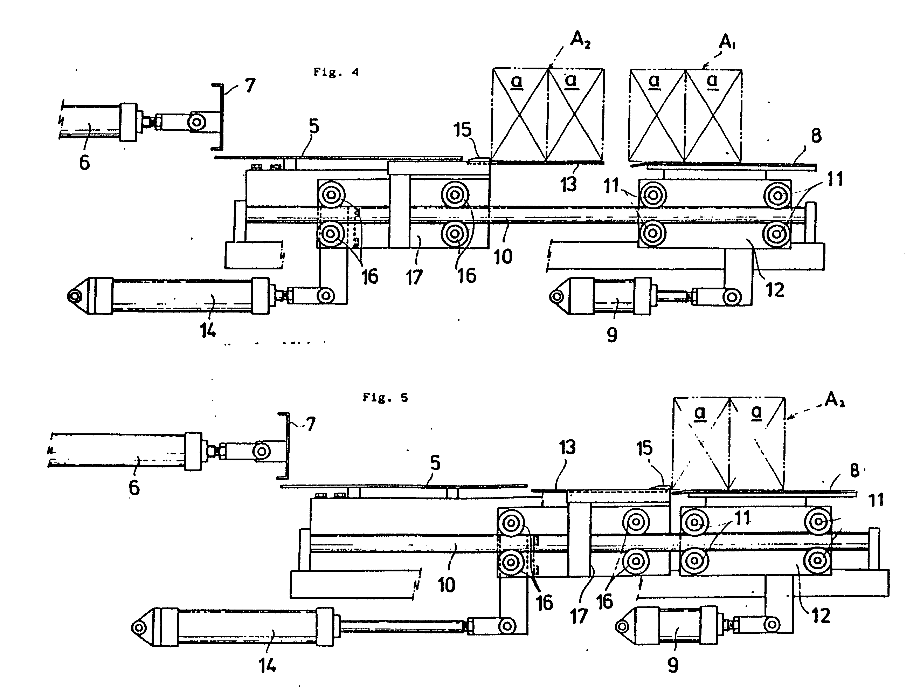

When the commodity group A is pushed out by the pusher (7) provided behind the platform 5, the commodity groups are placed on the floor portions 8 and 13. (Figure 3). Thereafter, only the forward floor portion 8 moves forward, so that the commodity group A1 thereon is separated from the commodity group A2 on the rear floor portion 13. (Figure 4).

In this condition, pusher 18 is used to discharge the commodity group A1 from the forward floor portion 8. Then, the forward floor portion 8 returns to the initial position, and simultaneously, the commodity group A2 on the rear floor portion 13 is pushed by the rear pusher 15 onto the forward floor portion 8. Then the commodity group A2 is discharged by the pusher 18 similarly to above operation.

During this dividing and discharging operation, the pusher 7 for pushing out the whole commodity group A returns to the initial position, and a new commodity group is collected on the platform 5.

In the accompanying drawing, such an embodiment is illustrated that commodities a shown in Figure 7 are collected into a group consisting of commodities of $2 \times 6$ in number as shown in Figure 8.

Referring to Figure 1, which is a plan view, commodities a successively supplied on a conveyor 1 are temporarily intercepted by a pair of vertical belts 2 and 3 disposed at both sides thereof. The vertical belts 2 and 3 are driven to supply four commodities forward.

The foremost commodity is intercepted, when four preceding commodities *a* have been aligned in abutting condition, and these are discharged sideways onto the platform 5 by a pusher 4. This operation is repeated six times so that a commodity group A consisting of $4 \times 6$ commodities is formed on the platform 5.

At the rear of the platform 5, a pusher 7 driven by a cylinder 6 is provided for discharging the whole commodity group A from the platform 5.

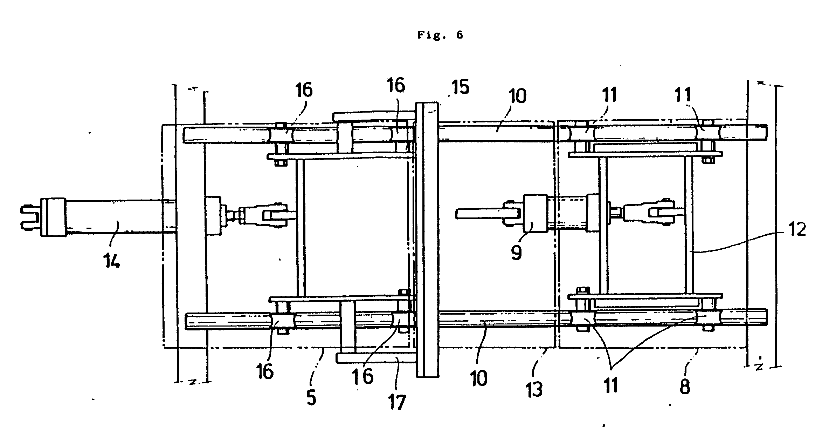

A forward floor onto which the commodity group A is discharged by the pusher 7 is, as apparent from figure 2, divided into two portions 13 and 8. The forward floor portion 8 is adapted to be moved by a cylinder 9 in the same direction as said pusher 7. The floor portion 8 is supported by a support frame 12 including wheels 11 and 11 for rolling on a guide rod 10. The support frame 12 is connected to the cylinder 9 for forward and rearward movement. (Figures 2 and 6).

On the other hand, a rear pusher 15 adapted to be moved forward and rearward by a cylinder 14 is provided at a rear end of a rear floor portion 13 which is stationary. The rear pusher 15 consists of a narrow plate-like member which is, similarly to that for said floor 8, supported by a support frame 17 including wheels 16 and 16 for rolling on the guide rod 10, and is adapted to engage with the lower and rear end of the commodity group A on the floor 13.

That is, the floor portions 8 and 13 are situated slightly lower, by one step than the platform 5, and the upper end of the rear pusher 15 is positioned on a same plane as the surface of the platform 5, so that the commodity group A may be pass over the rear pusher 15. The rear pusher 15 is designed to move from the rear end of the floor portion 13 to the forward end thereof.

The commodity group A collected on the platform 5, as shown in Figure 2, is pushed out by the pusher 7 onto the floor portions 8 and 13. (Figure 3).

Thereafter, the cylinder 9 operates to move the forward floor portion 8 forward, so that the group A of the $4 \times 6$ commodities is separated into groups A1 and A2 each including $2 \times 6$ commodities. The separated commodity group A2 is discharged by another pusher 18 to a next process. (Figure 4).

During above operation, the pusher 7 returns to the initial position, and the next collecting operation starts on the stockyard 5.

When the floor portion 8 from which the commodity group A1 has been discharged returns to the initial position, the rear pusher 15 driven by the cylinder 14 moves forward to push out the remaining commodity group A2 on the floor portion 13 onto the forward floor portion 8. (Figure 5). According to the above operation, the commodities which are collected into a group A consisting of $4 \times 6$ commodities are discharged as the groups A1 and A2 each consisting of $2 \times 6$ commodities to the next process. The operation is repeated to successively collect the intended number of the commodities.

In the illustrated embodiment, the collected commodity group is adapted to be divided into the two commodity groups. However, it may be divided into three commodity groups.

Namely, the rear floor portion 13 may be twice as large as the forward floor portion 8, so that one third of the large commodity group may be placed on the forward floor portion. In this case, the rear pusher 15 is designed to move forward in two steps, so that the commodity group A2 on the floor portion 13 may be pushed out half by half.

Generally speaking in order to collect a predetermined number of commodities, e.g., to collect an array of commodities of $n \times m$ in number, the conventional method needs to push out m times a number of n commodities by the pusher 4 onto the platform 5. Therefore, the time loss in which the commodities cannot line up on the conveyor is generated m times for the $n \times m$ commodities.

In addition, the time loss, in which the collecting operation can not be performed because of the operation of the pusher 7 for discharging the collected commodities, is generated one time for $n \times m$ commodities.

Contrary to the above, according to the invention, by temporarily collecting a larger number of commodities, e.g., $2n \times m$, the time loss caused by the stroke of pusher 4 is generated m times for the $2n \times m$ commodities, and the time loss caused by discharging operation of pusher 7 for the collected commodity group is generated one time for the $2n \times m$ commodities. Therefore, the time loss with respect to each desired group of $n \times m$ commodities becomes half as compared with the conventional device.

As stated above, according to the invention, the time loss caused by the operation of the pushers is remarkably reduced, and thus the collecting operation of the commodities can be performed more efficiently. In other words, high speed processing is advantageously possible in the collecting operation.

**Claim**

A device for collecting commodities wherein a predetermined number of commodities successively supplied by a conveyor (1) is accumulated on said conveyor and pushed out sideways by a pusher (4) onto a platform (5) and these operations are repeated to collect an array of commodities on said platform which array A is then pushed by a pusher (7) onto a receiving surface, characterized in that said receiving surface is divided into two parts (8, 13) located forward and rearward with respect to the moving direction of the pusher (7), in that the forward floor surface (8) on which a part (A1) of the pushed out commodity group (A) is positioned is designed to be movable in a same direction as the moving direction of the pusher so as to enable only the part (A1) of the collected commodity group (A) to be separated from the other commodity group part (A2) and to be discharged, and in that a rear-pusher (15) engaging with the rear end of the pushed out commodity group (A) is provided on the rear floor surface (13) so that the remaining commodity group part (A2) may be pushed out onto the forward floor surface (8) from which the first part (A1) of commodities has been discharged.

**Patentanspruch**

Vorrichtung zum Sammeln von Produkten, wobei eine vorbestimmte Anzahl von Produkten, die aufeinanderfolgend durch einen Förderer (1) zugeführt werden, auf dem Förderer akkumuliert werden und seitlich herausgestoßen werden durch einen Stößel (4) auf eine Plattform (5), und wobei diese Operation wiederholt wird, um ein Feld von Produkten auf der Plattform anzusammeln, welches dann durch einen Stößel (7) auf eine Empfangsfläche gestoßen wird, dadurch gekennzeichnet, daß die Empfangsfläche in zwei Teile (8, 13) aufgeteilt ist, welche vorwärts bzw. rückwärts mit Blick auf die Bewegungsrichtung des Stößels (7) angeordnet sind, daß die Vorderfläche (8), auf welcher ein Teil (A1) der ausgestoßenen Produktgruppe (A) angeordnet ist, so ausgestaltet ist, daß sie in die gleiche Richtung wie die Bewegungsrichtung des Stößels bewegbar ist, um zu ermöglichen, daß nur der Teil (A1) der gesammelten Produktgruppe (A) von der anderen Produktgruppe (A2) getrennt werden kann und entladen werden kann, und daß ein rückwärtiger Stößel (15), der das Rückende der ausgestoßenen Produktgruppe (A) beaufschlagt, auf der rückwärtigen Fläche (13) vorgesehen ist, so daß die verbleibende Produktgruppe (A2) auf die vordere Fläche (A) ausgestoßen werden kann, von welcher der erste Teil (A1) der Produkte entladen worden ist.

**Revendication**

Dispositif pour grouper des produits, dans lequel un nombre prédéterminé de produits fournis les uns à la suite des autres par un transporteur (1) est accumulé sur ledit transporteur et poussé latéralement en dehors de celui-ci par un poussoir (4) sur une plate-forme (5) et ces opérations sont répétées pour grouper un ensemble de produits sur ladite plate-forme, lequel ensemble (A) est ensuite poussé par un poussoir (7) sur une surface de réception, caractérisé en ce que ladite surface de réception est divisée en deux parties (8, 13), disposées en avant et en arrière par rapport à la direction de déplacement du poussoir (7), en ce que la surface avant (8) de plancher, sur laquelle une partie (A1) du groupe (A) de produits poussés est positionnée, est conçue pour pouvoir être déplacée dans une même direction que la direction de déplacement du poussoir afin de permettre uniquement à la partie (A1) du groupe (A) de produits groupés d'être séparée de l'autre partie (A2) du groupe de produits et d'être déchargée, et en ce qu'un poussoir arrière (15), portant contre l'extrémité arrière du groupe (A) de produits poussés, est prévu sur la surface de plancher arrière (13) afin que la partie restante (A2) du groupe de produits puisse être repoussée sur la surface avant (8) de plancher de laquelle la première partie (A1) de produits a été déchargée.

Fig. 1

Fig. 8

Fig. 7

Fig. 2

Fig. 3

0 174 596

Fig. 4

Fig. 5

0 174 596

Fig. 6